# EUROPÄISCHE PATENTSCHRIFT

(11) **EP 0 571 640 B1**
(45) Veröffentlichungstag und Bekanntmachung des Hinweises auf die Patenterteilung: **22.02.1995**
(21) Anmeldenummer: 92108034.7
(22) Anmeldetag: 13.05.1992
(51) Int. Cl.: B60R 13/02, B60R 13/08, B32B 7/02

(54) **Akustisch wirksame Wandverkleidung für Kraftfahrzeuge**
Sound-proofing wall liner for motor vehicles
Revêtement de paroi insonorisante pour véhicules automobiles

(43) Veröffentlichungstag der Anmeldung: 01.12.1993
(73) Patentinhaber: HP-CHEMIE PELZER RESEARCH & DEVELOPMENT Ltd., Waterford, County Waterford (IE)
(72) Erfinder: Casey, John, Tramore, County Waterford (IE)
(74) Vertreter: Hilleringmann, Jochen, Dipl.-Ing.

(56) Entgegenhaltungen:
- FR-A- 2 373 116
- US-A- 4 957 797

## Beschreibung

Die Erfindung betrifft eine akustisch wirksame Wandverkleidung für die Innenverkleidung von Personenkraftfahrzeugen, die aus mehreren mit einer mittleren Trägerschicht verbundenen Schichten besteht, an die Form der zu verkleidenden Oberfläche zur Verbindung mit dieser im wesentlichen angepaßt ist, als Außenschichten zum Fahrzeuginneren hin eine Dekorschicht und zur Fahrzeugwand hin eine an dieser anliegende Schwerschicht aufweist.

Ein als Wandverkleidung in Kraftfahrzeugen verwandtes Formteil ist aus der US-A-4,957,797 bekannt.

Ein durch die DE 32 33 675 A1 bekanntes Formteil geht von einem Stand der Technik aus, bei dem ein formstabiles Basisteil unter Druck- und Temperatureinwirkung mit einer das gewünschte Oberflächenmuster aufweisenden Folie kaschiert wird, die mit einer Kunststoff- oder Schaumstoffschicht hinterlegt ist. Es soll dessen Nachteile beseitigen. Dies soll geschehen, indem das gewünschte Prägemuster vor dem Kaschiervorgang in die Oberfläche des durch eine Folie von geringer, nicht über 0,5 mm liegender Dicke abzudeckenden, insbesondere aus einem Holzfaserwerkstoff bestehenden Basisteils eingearbeitet wird, so daß es sich beim Kaschiervorgang auf die Kaschierfolie überträgt. Zwischen Basisteil und Folie können zur Schaffung eines angenehmen Griffes sowie zur Erzeugung von Polstereigenschaften vorgeformte Schaumstoffteile eingelegt werden. Zur Herstellung verschiedenfarbener oder verschieden gemusterter Folienoberflächen werden entsprechend gestaltete Teilstücke zusammengesetzt, wobei sich überlappende Ränder der Folien bzw. der Teilstücke nach Abschluß des Kaschiervorgangs gesäubert werden.

Der nicht oder nur unter hohen Kosten mechanisierbare Anteil an Handarbeit ist bei der Herstellung dieses bekannten Formteils sehr hoch, wodurch sich das Produkt erheblich verteuert. Die Wiederverwertung (Recycling) der bekannten Verkleidungsteile ist praktisch nicht möglich. Darüber hinaus zeigt das bekannte Verkleidungsteil den erheblichen Nachteil, daß es zur Verminderung des von den Fahrzeuginsassen zu ertragenden Geräuschpegels nichts beitragen kann, da das aus verpreßten Holzfaserwerkstoffen bestehende Basisteil eine harte, statt schallabsorbierend eher schallverstärkend wirkende Schale bildet.

Durch die eingangs genannte US-A-4,957,797 ist ein mehrschichtiges Verkleidungsteil für ein Kraftfahrzeugdach bekannt. Die einzelnen Schichten sind gemeinsam geformt und dabei ggf. durch Kleben miteinander verbunden. Die Schichten sind um einer Trägerschicht angeordnet, der Wabenstruktur aufweist und aus einem sehr steifen Material wie dicker Pappe, Phenolharz-getränktem Papier, usw. besteht. Zum Fahrzeuginneren hin folgt eine Deckschicht aus Kunststoff- oder Glasfasern, Wolle, ggf. Phenolharz-getränktem Stoff, usw. und auf diese die Dekorschicht aus porösem Kunststoff, einem Gewebe, Gewirke, Non-Woven-Material, usw. Zum Fahrzeugdach hin folgt eine wie die Deckschicht aufgebaute Schicht und auf diese eine mit dem Dach vollflächig verklebte, beispielsweise aus mit Asphalt getränktem PU-Schaum bestehende Absorberschicht.

Der Erfindung liegt die Aufgabe zugrunde, eine für die Innenverkleidung von Kraftfahrzeugen, insbesondere Personenkraftwagen verwendbare, besonders für die Innenverkleidung von Türen geeignete Wandverkleidung zur Verfügung zu stellen, die gegenüber dem Stand der Technik verbesserte Dämm-, Absorptions- und Isoliereigenschaften aufweist und insbesondere eine Materialauswahl zuläßt, die sie zur praktisch abfallfreien Wiederverwertung geeignet macht. Die Aufgabe wird durch eine Wandverkleidung der eingangs beschriebenen Art gelöst, die sich dadurch auszeichnet, daß die die jeweils aus mindestens zwei Schichten bestehenden, insbesondere getrennt vorgeformten, im wesentlichen aneinander angepaßte Umrißformen aufweisenden, eine Dekorschale und eine Absorberschale bildenden Verkleidungsschalen über ihre gegeneinander weisenden Grenzflächen miteinander verbindende Trägerschicht eine erste Schwerschicht ist, und daß die Absorberschale auf der zur Fahrzeugwand weisenden Oberfläche der Schwerschicht in geringem oder ohne Abstand von dem Rand der Schwerschicht eine zusammenhängende, umlaufende Dichtleiste oder -lippe aufweist.

Insbesondere für die Bereitstellung einer akustisch wirksamen Türverkleidung ergab sich ein Problem dadurch, daß die Fahrzeugtüren aus einer Außenhaut und einer den zur Unterbringung der Scheibe mit ihrem Bewegungsmechanismus erforderlichen Hohlraum zum Fahrzeuginneren hin abdekkenden, meist mehrere Durchbrüche aufweisenden Innenwand bestehen. Zwar wurde gefunden, daß bereits eine Wandverkleidung, die zwischen einer Dekorschicht und einer an der Fahrzeugwand anliegenden Absorberschicht eine als Schwerschicht wirkende Zwischenschicht aufweist, zu einer beachtlichen Verringerung des in das Fahrzeuginnere dringenden Störschalls führt, eine durchgreifende Verbesserung ergab sich dieser gegenüber jedoch durch den erfindungsgemäßen Aufbau der Wandverkleidung derart, daß einmal die Absorberschicht auch zur Fahrzeugwand hin durch eine weitere Schwerschicht abgedeckt wird, und zum anderen, daß diese Schwerschicht dichtend an die Innenwand der Fahrzeugtür angelegt wird und dadurch den zum Fahrzeuginneren hin offenen Hohlraum zwischen Türaußenhaut und Türinnenwand abschirmt.

Eine weitere Verbesserung der akustischen Wirkung kann, sofern die Platzverhältnisse dies erlauben, erzielt werden, wenn die Dekorschale wenigstens auf einem Teil ihrer Fläche zwischen Dekorschicht und Trägerschicht eine bevorzugt als Absorber wirksame Unterschicht erhält.

Bei der Herstellung der erfindungsgemäßen Wandverkleidung ist es grundsätzlich möglich, die einzelnen Materialzuschnitte für die Dekorschicht, die Trägerschicht, die Absorber- und die Schwerschicht, falls vorgesehen, auch für die zwischen Dekor- und Trägerschicht vorgesehene Absorberschicht, als vorbereitetes Paket in eine Preßform einzulegen und daraus dann durch Anwendung von Druck und Wärme die Wandverkleidung zu formen. Werden jedoch, wie erfindungsgemäß bevorzugt, beide Formschalen zunächst getrennt hergestellt, so kann die Absorberschale ohne Änderungen mit unterschiedlich aufgebauten und ausgestatteten Dekorschalen - oder umgekehrt - zu der fertigen Wandverkleidung kombiniert werden. Es ist so möglich, der Absorberschale einen Aufbau zu geben, der ausschließlich nach Gesichtspunkten der bei der jeweils vorliegenden Situation günstigsten akustischen Leistungsfähigkeit und Wirksamkeit ausgerichtet und an die konkreten Anforderungen bestmöglich angepaßt ist, während bei der Gestaltung der Dekorschale zwar die erforderliche Paßform beachtet werden muß, im übrigen aber nur auf ästhetische Gesichtspunkte und den bestmöglichen Fahrkomfort zu achten ist. Von Vorteil ist es dabei, wenn mindestens die Dekorschicht und die ebenfalls als Schwerschicht wirksame Trägerschicht vorzugsweise auch die die Absorberschale zur Fahrzeugwand hin abschließende Schwerschicht, aus thermisch verformbarem Material bestehen.

Bei der getrennten Herstellung der beiden Formschalen ergeben sich beispielsweise für die Gestaltung insbesondere der Dekorschale unterschiedene Möglichkeiten. So kann die Dekorschicht der Dekorschale beispielsweise aus einem vorzugsweise thermisch verformbaren Träger als Grundlage bestehen, der eine Dekorbeschichtung aufweist bzw. erhält oder durch eine bevorzugt ebenfalls thermisch verformbare Folie oder dgl. abgedeckt ist. Die Dekorschicht kann auch beispielsweise aus einem Nadelvlies, einer Velours-Teppichware oder einer Webware bestehen.

Dabei ergeben sich auch für die Träger- oder Zwischenschicht mehrere Möglichkeiten, die auf Gestaltung und Aufbau der Dekorschale und der Absorberschale keinen Einfluß haben müssen. So kann bei Verwendung einer Form durch Einlegen der beiden Schalen nach dem Schließen der Form in den zwischen den zwei Schalen vorgesehenen Spalt zur Bildung der Zwischenschicht ein ggf. mit Füllstoffen versetzter thermoplastischer Kunststoff eingespritzt werden. Dies erfolgt unter Verfahrensbedingungen, bei denen sich der Kunststoff beim Spritzvorgang mit den dem Spalt zugekehrten Oberflächen der Dekorschale und der Absorberschale innig verbindet und so der erfindungsgemäßen Wandverkleidung Zusammenhalt und vorzugsweise auch eine ggf. erhöhte Stabilität verleiht.

Bei der Vereinigung der beiden Schalen wie vorhergehend beschrieben in einer Form werden in der Absorberschale zweckmäßig bereits bei der Herstellung oder vor dem Einlegen in den Formenboden Durchlaßöffnungen für die Spritzmasse vorgesehen. Diese werden bevorzugt so angeordnet, daß ihre Lage mit der Lage der Spritzdüsen, vorzugsweise Nadelverschlußdüsen, im Formenboden übereinstimmt.

Werden beispielsweise die Mündungen der oder einiger Spritzdüsen als in das Innere der Spritzform hineinragende Haltenadeln ausgebildet oder eine genügende Anzahl der Haltenadeln gleichzeitig als Einspritzdüsen verwendet, so kann vorteilhaft die Herstellung der Durchlaßöffnungen mit dem Einlegen der Absorberschale in die Form erfolgen.

Dekoroberflächen mit unterschiedlich bemusterten Teilbereichen können beispielsweise dadurch erzielt werden, daß die Dekorschale aus zwei oder mehr ohne Zwischenraum aneinanderstoßenden, einzeln vorgefertigten Flächenabschnitten mit jeweils eigener Dekor- und Trägerschicht, ggf. auch mit dazwischen angeordneter Absorberschicht, zusammengesetzt ist, wobei die einzelnen Flächenabschnitte jeweils eigene, von denen der anderen Abschnitte abweichende Dekorschichten aufweisen und/oder aus von dem der anderen Abschnitte unterschiedenem Material bestehen können.

Die Verbindung der einzelnen Flächenabschnitte der zusammengesetzten Dekorschale kann auf unterschiedliche Weise erfolgen. So können die Flächenabschnitte etwa durch das - beispielsweise in einer geeigneten Form vorgenomene - Verbinden der die Dekorschale bildenden Einzelabschnitte mit der Absorberschale in ihrer Anordnung zueinander festgelegt werden. Oder die einzeln vorgefertigten Flächenabschnitte können, ggf. vor dem Formvorgang, entlang ihren Berührungskanten - beispielsweise durch Verschweißen oder Verkleben - miteinander verbunden werden.

Für die Herstellung der erfindungsgemäßen Wandverkleidung kann vorteilhaft ein an eine geeignete Spritzgießanlage angeschlossenes Werkzeug benutzt werden. Dieses besteht beispielsweise aus einer fest aufgespannten Formenhälfte (im weiteren Formenboden) und einer beweglich aufgespannten Formenhälfte (im weiteren Formendeckel). Formenboden und Formendeckel sind auf ihren Innenseiten mit Haltenadeln ausgerüstet. Eine Formenhälfte, vorzugsweise der Formenboden, ist mit einer dem vorgesehenen Ablauf des Spritzvorganges angepaßten Zahl von Nadelverschlußdüsen ausgerüstet.

Bei der Herstellung einer erfindungsgemäßen Wandverkleidung wird beispielsweise die den beschriebenen Bedingungen genügende vorgeformte Dekorschale, deren ggf. vorhandener Umbug an den rückseitigen Rand angelegt ist, in die Haltenadeln des Formendeckels eingelegt und der Formendeckel auf eine Temperatur von ca. 40 °C bis 60 °C gebracht. In die Haltenadeln des auf eine Temperatur von ca. 40 °C bis 80 °C gebrachten Formenbodens wird die ebenfalls vorgeformte Absorberschale eingelegt, nachdem sie an den mit den Spritzdüsen korrespondierenden Orten mit in den für die Zwischenschicht vorgesehenen Spalt zwischen Dekor- und Absorberschale mündenden Durchbrüchen versehen wurde. Nach dem Schließen der Form wird dann beispielsweise im Niederdruckverfahren aus einem geeigneten Thermoplast die Trägerschicht hergestellt.

Für die akustische Wirkung der erfindungsgemäßen Wandverkleidung ist die Ausstattung der Absorberschale mit der wandseitigen Schwerschicht (neben der Trägerschicht und der auf der zur Fahrzeugwand weisenden Oberfläche der Schwerschicht angeordneten Dichtleiste oder Dichtlippe von erheblicher Bedeutung. Es hat sich gezeigt, daß die an der eine Reihe Durchbrüche und Öffnungen aufweisenden inneren Türwand anliegende, durch die umlaufende Dichtleiste abgedichtete Schwerschicht zu einer sprunghaften Verbesserung gegenüber der durch den Stand der Technik erreichbaren Dämmwirkung führt.

In manchen Fällen kann es zur Erleichterung der Verbindung mit der Trägerschicht günstig sein, wenn die zu der Dekorschale weisende Oberfläche des Absorberteils der Absorberschale mindestens in Teilbereichen zu einer Grenzschicht verfestigt wird.

Dies kann beispielsweise dann von Vorteil sein, wenn die Trägerschicht oder verbindende Zwischenschicht, u.a. beispielsweise zur Beeinflussung der akustischen Eigenschaften der erfindungsgemäßen Wandverkleidung bzw. zur Herstellung der Verbindung zwischen den beiden die Wandverkleidung bildenden Formschalen, durch den Abschnitt eines Folienschlauchs aus geeignetem, sich - beispielsweise bei der Abkühlung - verfestigendem Material gebildet wird; geeignet sind beispielsweise auch Folienschläuche aus einem sich im thermoplastischen Zwischenzustand befindenden, durch weiteres Erhitzen (ggf. durch die Gegenwart geeigneter Härter) zu einem Duroplast vernetzenden Material.

Zur Herstellung der Verbindung in einer Form werden beispielsweise die beiden die Wandverkleidung bildenden Schalen in einem geeigneten Formwerkzeug miteinander verbunden, in dem der zuvor an den Enden verschlossene, unter vorzugweise schwachem Luftdruck stehende Folienschlauchabschnitt vor dem Schließen der Form zwischen die Dekorschicht bzw. die Dekorschale und die Absorberschale eingelegt und die Schlauchoberflächen durch bekannte geeignete Maßnahmen wie Anwendung von Wärme oder/und Imprägnierung der Kontaktflächen innig mit den Kontaktflächen der beiden Schalen verbunden werden. Beim Schließen der Form werden die Überstände des Folienschlauches, bevorzugt bündig, mit den Außenrändern der Dekorschale und der Absorberschale abgeschert. Der Ablauf wird dabei vorteilhaft so gesteuert, daß die Verbindung der Folienoberfläche mit den Kontaktoberflächen hergestellt, insbesondere abgeschlossen ist, wenn das Abscheren der Überstände des Folienschlauches erfolgt. Zu beachten ist dabei, daß zur Stabilisierung des - ggf. die Trägerschicht bildenden - Folienschlauchabschnittes die Grenzfläche der Dekorschale bzw. ihrer Absorberschicht oder ggf. auch die der Dekorschale zugewandte Grenzfläche der Absorberschale mit Rippen versehen werden, die den erforderlichen Abstand zwischen den mit der Schlauchfolie zu verbindenden Grenzflächen gewährleisten. Anzahl, Größe und Verteilung der Rippen können unter Berücksichtigung ihrer akustischen Wirkung beispielsweise auf Grund von Festigkeits- sowie Stabilitätsabschätzungen bestimmt werden. Dabei soll die Höhe der einzelnen Rippen bei Berücksichtigung der hinzuzurechnenden Foliendicke dem vorgesehenen Abstand der Grenzflächen entsprechen. Bevorzugt weisen daher die Rippen eine Höhe auf, die im wesentlichen dem um die zweifache, vorzugsweise dem um die einfache bis anderthalbfache Foliendicke verringerten Grenzflächenabstand entspricht. Damit soll die beim Schließen der Form im Bereich der Rippen in der Wärme sich verringernde Dicke der Schlauchwände in ausreichendem Maße berücksichtigt werden.

Ausgehend von einer breiten Palette von zur Verfügung stehenden Ausgangsstoffen, insbesondere von Kunststoffen, die zu Fäden und Fasern ebenso wie zu verschiedenartigen Schäumen und Folien, zu biegsamen, hart- oder weichelastischen, akustisch wirksamen Platten bzw. Flächengebilden verarbeitbar sind, kann die erfindungsgemäße Wandverkleidung ohne wesentliche Einschränkungen für ihre Gestaltung in allen ihren Teilen bzw. Schichten aus verschiedenen Verarbeitungsformen desselben oder chemisch verwandter Ausgangsmateralien aufgebaut sein und daher problemlos dem Recycling zugeführt werden.

Dabei ist auch hilfreich, daß bei der Ausführung der Erfindung Schwierigkeiten, welche sich durch unterschiedliche Anforderungen, beispielsweise durch verschiedene Verarbeitungstemperaturen einstellen könnten, mindestens bei der getrennten Herstellung der beiden Formschalen weitgehend vermeidbar oder überwindbar sind.

Dies gilt insbesondere für Fälle, bei denen die Dekorschale verschiedene Abschnitte mit unterschiedlicher Musterung aufweisen soll. Hier treten bei dem bekannten Stand der Technik vor allem an den Stoßstellen der einzelnen Muster Schwierigkeiten auf, da die sich gegenseitig überlappenden Folienabschnitte in aufwendiger Arbeit versäubert werden müssen. Die Erfindung löst das Problem durch die getrennte Herstellung der einzelnen Musterbereiche der Dekorschale, die dabei mit sauberen (Umbug)-Kanten versehen werden können. Die Zusammenfügung der einzelnen Teile wurde weiter oben beschrieben.

In allen beschriebenen Fällen besteht die Absorberschale aus einer Absorberschicht und einer mit der Absorberschicht ganzflächig verbundenen, auf der Außenseite mit einer in Randnähe umlaufenden Dichtlippe versehenen Schwerschicht. Die Absorberschicht besteht bevorzugt aus einem offenporigen bzw. luftdurchlässigen akustisch wirksamen, insbesondere unter Beibehaltung der Luftdurchlässigkeit bzw. Offenporigkeit thermisch verformbaren Material.

Anhand der in der beigegebenen Zeichnung dargestellten Ausführungbeispiele wird die Erfindung erläutert. Es zeigt:
- Fig. 1: mit gegenseitigem Abstand Dekorschale, Zwischenschicht und Absorberschale;
- Fig. 2: aus den Teilen der Fig. 1 zusammengesetzte Wandverkleidung;
- Fig. 3: eine weitere Ausführung der erfindungsgemäßen Wandverkleidung.
- Fig. 4: zweiteiliges Formwerkzeug mit eingelegtem Dekorteil und Absorberteil.

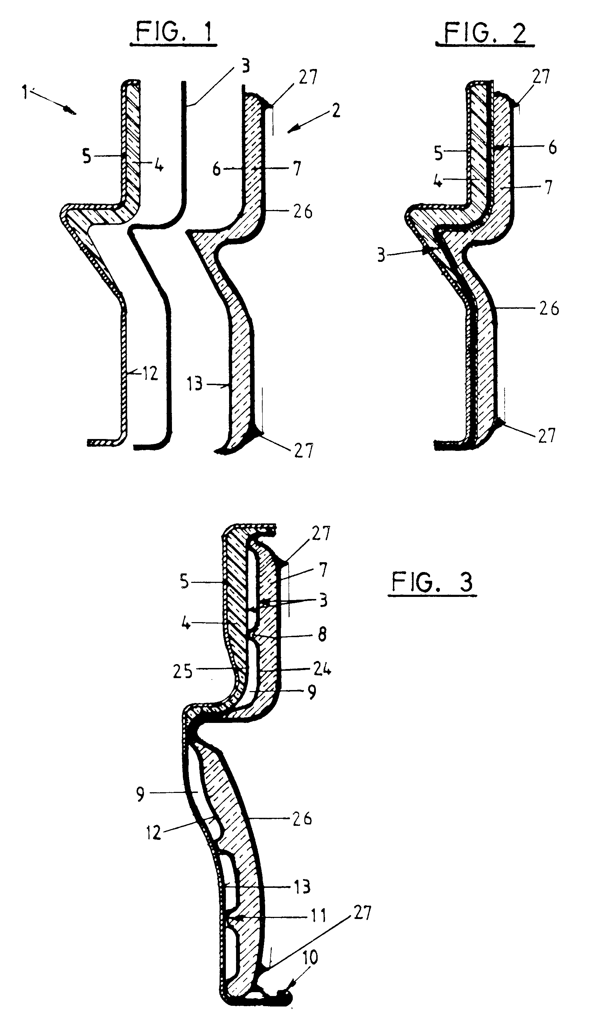

Es wird darauf hingewiesen, daß die Figuren unmaßstäbliche Prinzipdarstellungen sind, die funktionell nach der Erfindung ausgeführten Wandverkleidungen entsprechen und der Erläuterung der Erfindung dienen. Insbesondere dient die Darstellung der Fig. 1 mit der auseinandergezogenen Darstellung der beiden Verkleidungsschalen 1, 2 und der Zwischenschicht 3 Demonstrationszwecken und zeigt eine Ausbildungsform, bei der die Dekorschale 1 im oberen Teilbereich zwischen einer Dekorschicht 5 und einer Trägerschicht oder Zwischenschicht 3 eine ggf. Absorbereigenschaften aufweisende Unterschicht 4 aufweist; die Absorberschale 2 besteht aus der Absorberschicht 7 und einer auf ihrer zur (nicht dargestellten) Fahrzeugwand weisenden Oberfläche mit einer umlaufenden Dichtleiste oder Dichtrippe 27 ausgestatteten Schwerschicht 26. Bei der dargestellten Ausführung ist die zur Dekorschale 1 weisende Oberfläche der Absorberschicht 7 der Absorberschale 2 zu einer Grenzschicht 6 verfestigt, was sich abhängig vom verwendeten Absorbermaterial in manchen Fällen als vorteilhaft erwiesen hat.

Es sei betont, daß in allen Figuren die Dichtleiste oder -rippe 27 vereinfachend als in den Endbereichen der Schwerschicht 26 vorgesehene spitz zulaufende Erhebungen 27 dargestellt ist. Sie soll jedoch in der Nähe des Außenrandes (Kontur) der Schwerschicht 26 als - vorzugsweise aus weichelastischem Material bestehende - Dichtlippe 27 dem Außenrand der Schwerschicht 26 ohne Unterbrechung folgen und so für eine lückenlose Abdichtung zwischen Schwerschicht 26 und nicht dargestellter (innerer) Türwand sorgen.

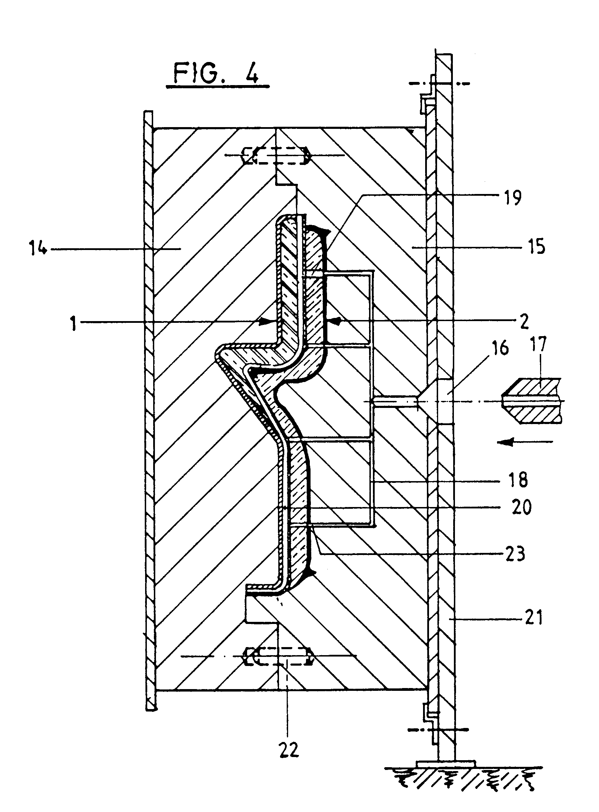

Die Fig. 2 zeigt eine erfindungsgemäße Wandverkleidung mit der aus der Dekorschicht 5, der Unterschicht 4 und der beispielsweise aus einem thermoplastischen Material hergestellten Zwischen- oder Trägerschicht 3 bestehenden Dekorschale 1 und der aus der Absorberschicht 7 mit verfestigter Grenzschicht 6 und der mit der Dichtlippe 27 versehenen Schwerschicht 26 bestehenden Absorberschale 2. Wie bereits ausgeführt, ist sowohl die getrennte Herstellung der beiden Formschalen 1, 2 mit anschließendem Zusammenfügen der beiden Schalen 1, 2 - ggf., wie in Fig. 4 gezeigt, unter Herstellung der Zwischenschicht in einer Form - als auch die Herstellung der aus den beiden Schalen 1, 2 bestehenden Wandverkleidung in einem Arbeitsgang möglich. Dabei ist zu beachten, daß die verfestigte Grenzschicht 6 der Absorberschicht 7 bei der getrennten Herstellung beider Schalen 1, 2 Vorteile bringen kann, jedoch bei der Herstellung in einem Arbeitsgang in der Regel überflüssig sein dürfte.

Bei der Herstellung in einem Arbeitsgang werden die für die einzelnen Schichten der Wandverkleidung vorgesehenen Materiallagen - ggf. gemeinsam - zugeschnitten, in eine geeignete Form eingelegt und bei geschlossener Form unter Einwirkung von Druck und Hitze - ggf. zugleich oder nacheinander - einschließlich der Anformung des Umbugs 10 zu der fertigen Wandverkleidung geformt. Dabei ist es erforderlich oder doch mindestens zweckmäßig, die Materialauswahl so zu treffen, daß die anzuwendenden Temperaturen und ihre Einwirkungszeiten sowie die zur Formung und Herstellung der Verbindung zwischen den Schichten erforderlichen Drücke für alle Schichten im wesentlichen in den gleichen Größenordnungen liegen.

Bei der Herstellung der Dekorschale 1 und der Absorberschale 2 in getrennten Arbeitsgängen ist die genaue Beachtung der vorhergehend beschriebenen Kriterien für die Materialauswahl nicht unbedingt erforderlich. Vielmehr hat die getrennte Herstellung den Vorteil, daß beide Schalen 1 und 2 jeweils bezüglich ihres Aufbaus und der verwendeten Ausgangsmaterialien für die jeweils von ihnen zu erfüllende Aufgabe unabhängig voneinander durch die jeweils entsprechende Wahl der Ausgangsstoffe optimiert werden können.

Die Dekorschale 1 der Figuren 1 und 2 besteht - wie bereits angedeutet - aus der eigentlichen Dekorschicht 5, die bei der Herstellung im mittleren bis oberen Bereich mit einer ggf. absorbierenden Unter- oder Stützschicht 4 hinterlegt wurde, und der einige Formfestigkeit aufweisenden Trägerschicht 3. Die Unterschicht 4 kann - zum Erzielen von Polstereigenschaften - aus einem geeigneten Weichschaum bestehen, während für die Dekorschicht 5 ein Nadelvlies, eine Velours-Teppichware, eine Webware oder ein anderes geeignetes Material verwandt werden kann. Die Dekorschicht 5 kann aber auch beispielsweise aus einer vorzugsweise thermisch verformbaren, mit einer Dekorbeschichtung oder - ggf. bei der Formung - mit einer bevorzugt ebenfalls thermisch verformbaren Folie oder dgl. bemusterten Stützschicht bestehen.

Eine aus unterschiedlich bemusterten Teilbereichen bestehende Dekorschicht 5 kann beispielsweise dadurch erzielt werden, daß die Dekorschale 1 aus zwei oder mehr ohne Zwischenraum aneinanderstoßenden, einzeln vorgefertigten Dekorschalenabschnitten mit jeweils eigener Dekor- (5) und Trägerschicht 3, ggf. mit dazwischen angeordneter Unterschicht 4, zusammengesetzt ist, wobei die einzelnen Flächenabschnitte jeweils eigene, von denen der anderen Abschnitte abweichende Dekorschichten 5 aufweisen und/oder aus von dem der anderen Abschnitte unterschiedenem Material bestehen können.

Die Verbindung der einzelnen Flächenabschnitte der zusammenzusetzenden Dekorschale 1 kann auf unterschiedliche Weise erfolgen. So können die Flächenabschnitte etwa durch das - beispielsweise in einer geeigneten Form vorgenomene - Verbinden der die Dekorschale 1 bildenden Einzelabschnitte mit der Absorberschale 2 in ihrer Anordnung zueinander festgelegt werden. Oder die Berührungskanten der einzeln vorgefertigten Flächenabschnitte können, ggf. vor dem Formvorgang - beispielsweise durch Verschweißen oder Verkleben - miteinander verbunden werden.

Die Stützschicht 4 der Dekorschale 1 kann bevorzugt aus einem Material bestehen, das in dem in der Wärme verformten Zustand in sich im wesentlichen formstabil ist. In jedem Fall wird bei der Dekorschale 1 ein Aufbau bevorzugt, der ihr - u.a. zur Erleichterung der Manipulierbarkeit - eine gewisse Formstabilität gibt.

Eine abgewandelte Ausführungsform der erfindungsgemäßen Wandverkleidung zeigt die Fig. 3. Von der vorhergehend beschriebenen unterscheidet sich die Wandverkleidung der Fig. 3 durch eine besondere Form der Trägerschicht 3. Zur Bildung dieser Trägerschicht 3 wird nach dem Einlegen der Dekorschale 1 - oder auch der Absorberschale 2 - in eine zum Zusammenfügen der Schalen 1, 2 benutzte Form und vor dem Schließen der Form (Fig. 4) zwischen die beiden Schalen 1, 2 ein unter vorzugsweise schwachem Luftdruck stehender, an den Enden verschlossener Folienschlauchabschnitt 24, 25 eingelegt. In dem in Fig. 3 dargestellten Ausführungsbeispiel ist die Grenzschicht 6 der Absorberschale 2 mit Rippen 8 versehen. Durch das Zusammendrücken des Folienschlauches 24, 25 erhöht sich der Innendruck, so daß sich die Folienschlauchoberflächen an die Berührungsflächen 12, 13 der Dekorschale 1 und der Absorberschale 2 anlegen und sich - vorzugsweise außer der Wirkung des erhöhten Luftdrucks auch durch Wärmeeinwirkung - mit diesen beim Schließen der Form verbinden. Im Bereich der Rippen 8 werden dabei die beiden Schlauchwände 24, 25 aufeinandergepreßt. Zwischen den Rippen 8 bilden die durch den Innendruck gegen die Flächen 12, 13 gedrückten Schlauchfolienwände 24, 25 sich beim Abkühlen verfestigende Hohlräume 9.

Die Fig. 4 zeigt eine Möglichkeit zur Herstellung der Träger- oder Zwischenschicht 3 unter gleichzeitiger Verbindung der Dekorschale 1 mit der Absorberschale 2. Eine Spritzform für die Herstellung des in Fig. 2 dargestellten erfindungsgemäßen Verkleidungsteils besteht aus einem Formenboden 15 und einem Formendeckel 14. Beide Formenhälften 14 und 15 sind mit Hilfe der Paßstifte 22 in ihrer Lage zueinander festgelegt. Der Formenboden 15 ist mit einer - wie angedeutet am Boden befestigten - Verankerung 21 verbunden. Der Formenboden 15 (mit der Verankerung 21) weist eine Einfüllöffnung 16 auf, in welche das nur angedeutete Spritzwerkzeug 17 eingefahren werden kann. Von der Einfüllöffnung 16 führt ein sich verzweigender Verteilerkanal 18 zu den Spritzdüsen 23.

Die Dekorschale ist (Fig. 4) in den Formendeckel 14 eingelegt und in ihrer Lage durch nicht dargestellte Nadeln gehalten. Die vorher mit Öffnungen 19 zum Schmelzedurchtritt versehene Absorberschale 2 ist im Formenboden 15 eingelegt. Die Form ist geschlossen. Zwischen Dekorschale 1 und Absorberschale 2 ist ein Spalt 20 geblieben. Zur Fertigstellung der erfindungsgemäßen Wandverkleidung wird nach dem Schließen der Form das Spritzwerkzeug 17 in die Einfüllöffnung 16 gefahren und der Spalt 19 über die Kanäle 18 und die Spritzdüsen 23 mit der sich beim Ausfüllen des Spalts 20 mit den beiden Berührungsflächen 12, 13 verbindenden Kunststoffschmelze ausgefüllt. Dabei entsteht die Zwischenschicht 3. Insbesondere dann, wenn einzelne Nadeln zugleich als durch die Absorberschale reichende Spritzdüsen 23 ausgebildet sind, aber auch bei der vorhergehend beschriebenen Ausrüstung haben sich die Durchgänge 19 in der Absorberschale 2 als akustisch unschädlich erwiesen.

Nach dem Abkühlen der Zwischenschicht 3 wird der Formendeckel 14 weggefahren und die Wandverkleidung entnommen.

Insbesondere die Dekorschale 1, aber auch die Absorberschale 2 können zum Erreichen sauberer Umrandungen mit Vorteil einen Umbug 10 erhalten, der beispielsweise dadurch hergestellt wird, daß die Außenränder in bekannter Weise nach innen umgeschlagen werden.

### ZUSAMMENSTELLUNG DER BEZUGSZEICHEN

- 1: Dekorschale, Formschale
- 2: Absorberschale, Formschale
- 3: Zwischenschicht, Trägerschicht
- 4: Unterschicht, Stützschicht
- 5: Dekorschicht
- 6: Grenzschicht
- 7: Absorberschicht
- 8: Rippe
- 9: Luftkammer
- 10: Umbug
- 11: Verbindungsstelle
- 12: Berührungsfläche
- 13: Berührungsfläche
- 14: Formendeckel
- 15: Formenboden
- 16: Einfüllöffnung
- 17: Spritzwerkzeug
- 18: Verteilerkanal
- 19: Durchlaßöffnung
- 20: Spalt
- 21: Verankerung
- 22: Paßstift
- 23: Spritzdüsen
- 24: Folienschlauchabschnitt
- 25: Folienschlauchabschnitt
- 26: Schwerschicht
- 27: Dichtleiste, Dichtlippe

## Patentansprüche

1. Wandverkleidung für Fahrzeuge, insbesondere zur Innenabdeckung der Türen an Personenkraftfahrzeugen, die an die Form der zu verkleidenden Oberfläche zur Verbindung mit dieser im wesentlichen angepaßt ist und die aus mindestens zwei jeweils aus mindestens zwei Schichten (4, 5; 7, 26) bestehenden, insbesondere getrennt vorgeformten, im wesentlichen aneinander angepaßte Umrißformen aufweisenden, eine Dekorschale (1) und eine Absorberschale (2) bildenden Verkleidungsschalen (1; 2) besteht, deren gegeneinander weisenden Grenzflächen über eine mittlere Trägerschicht (3) miteinander verbunden sind, sowie
als Außenschichten zum Fahrzeuginneren hin eine Dekorschicht (5) und zur Fahrzeugwand hin eine an dieser anliegende Schwerschicht (26) aufweist,
dadurch gekennzeichnet, daß
die die Verkleidungsschalen verbindende Trägerschicht (3) eine erste Schwerschicht ist,
und daß die mindestens aus einer Absorberschicht (7) und einer weiteren Schwerschicht (26) bestehende Absorberschale (2) auf der zur Fahrzeugwand weisenden Oberfläche der Schwerschicht (26) in geringem oder ohne Abstand von dem Rand der Schwerschicht (26) eine zusammenhängende, umlaufende Dichtleiste oder -lippe (27) aufweist.

2. Wandverkleidung nach Anspruch 1,
dadurch gekennzeichnet, daß
die Dekorschale (1) wenigstens auf einem Teil ihrer Fläche zwischen Dekorschicht (5) und Trägerschicht (3) eine Unterschicht (4) aufweist.

3. Wandverkleidung nach Anspruch 1 oder 2,
dadurch gekennzeichnet, daß
die Dekorschicht (5) und/oder die Trägerschicht (3) (1) aus thermisch verformbarem Material bestehen (besteht).

4. Wandverkleidung nach Anspruch 1 oder 2,
dadurch gekennzeichnet, daß
die Dekorschicht (5) der Dekorschale (1) aus einem vorzugsweise thermisch verformbaren Träger und einer auf diesen aufgebrachten Beschichtung oder einer bevorzugt ebenfalls thermisch verformbaren Abdeckung besteht.

5. Wandverkleidung nach Anspruch 3,
dadurch gekennzeichnet, daß
die Dekorschicht (5) der Dekorschale (1) aus einem Nadelvlies, einer Velours-Teppichware oder einer Webware besteht.

6. Wandverkleidung nach einem der Ansprüche 2 bis 5,
dadurch gekennzeichnet, daß
die Dekorschale (1) aus zwei oder mehr ohne Zwischenraum aneinanderstoßenden, einzeln vorgefertigten Flächenabschnitten zusammengesetzt ist,
daß jeder einzelne Flächenabschnitt jeweils eine eigene, von denen der anderen Abschnitte abweichende Dekorschicht (5) aufweist und/oder aus von dem der anderen Abschnitte unterschiedenem Material besteht und
daß die einzelnen Flächenabschnitte der Dekorschale (1) durch das Verbinden der Dekorschale (1) mit der Absorberschale (2) in ihrer Anordnung zueinander festgelegt werden.

7. Wandverkleidung nach einem der Ansprüche 2 bis 5,
dadurch gekennzeichnet, daß
die Dekorschale (1) aus zwei oder mehr ohne Zwischenraum aneinanderstoßenden, einzeln vorgefertigten Flächenabschnitten zusammengesetzt ist und
daß die einzelnen Flächenabschnitte jeweils eigene, von denen der anderen Abschnitte abweichende Dekorschichten (5) aufweisen und/oder aus unterschiedlichem Material bestehen und - ggf. vor dem Formvorgang - entlang ihren Berührungskanten, vorzugsweise durch Verschweißen oder Verkleben, miteinander verbunden.

8. Wandverkleidung nach einem der Ansprüche 1 bis 7,
dadurch gekennzeichnet, daß
die Absorberschale (2) aus einer aus einem offenporigen bzw. luftdurchlässigen akustisch wirksamen, vorzugsweise thermisch unter Beibehaltung der Luftdurchlässigkeit bzw. Offenporigkeit verformbaren Material bestehenden Absorberschicht (7) und
einer mit der Absorberschicht (7) ganzflächig verbundenen, auf der nach außen weisenden Oberfläche mit der umlaufenden Dichtleiste oder -lippe (27) versehenen Schwerschicht (26) besteht.

9. Wandverkleidung nach Anspruch 5,
dadurch gekennzeichnet, daß
die der Trägerschicht (3) gegenüberliegende Grenzschicht (6) der Absorberschale (2) zur Erleichterung der Verbindung mit der Trägerschicht (3) mindestens in Teilbereichen verfestigt ist.

10. Wandverkleidung nach einem der Ansprüche 2 bis 5,
dadurch gekennzeichnet, daß
die beiden Formschalen (1, 2) durch einen in einer Form zwischen die Formschalen (1, 2) eingebrachten gasgefüllten, in der Form verfestigten, zugleich die Trägerschicht (4) bildenden Folienschlauchabschnitt (24, 25) verbunden sind.

11. Verfahren zur Herstellung einer Wandverkleidung nach einem der Ansprüche 1 bis 10, insbesondere 1 bis 9,
dadurch gekennzeichnet, daß
in eine aus einer beweglich aufgespannten Formenhälfte (14) und einer fest aufgespannten Formenhälfte (15) bestehende Form einer Spritzgießanlage eine vorgefertigte Dekorschale (1) in den Formendeckel (14)
und eine vorgefertigte Absorberschale (2) in den Formenboden (15) derart eingelegt wird,
daß nach dem Schließen der Form (14, 15) zwischen Dekorschale (1) und Absorberschale (2) ein vorzugsweise im wesentlichen durchgehender Spalt (20) bleibt,
daß Deckel (14) und Boden (15) der Form, vorzugsweise getrennt, aufgeheizt werden,
daß die Form (14, 15) geschlossen wird und die den Spalt (20) begrenzenden Berührungsflächen (12, 13) durch Herstellen einer den Spalt (20) ausfüllenden Zwischenschicht (3) miteinander verbunden werden und
daß die Wandverkleidung (1-3) nach Abkühlung der Zwischenschicht ausgeformt wird.

12. Verfahren nach Anspruch 11,
dadurch gekennzeichnet, daß
nach dem Schließen der Form (14, 15) der Spalt (20) zwischen Dekorschale (1) und Absorberschale (2) durch Einspritzen eines akustisch wirksamen, sich in der Wärme mit den Berührungsflächen (12, 13) der Dekorschale (1) und der Absorberschale (2) verbindenden thermoplastischen Kunststoffes aufgefüllt wird.

13. Verfahren nach Anspruch 12,
dadurch gekennzeichnet, daß
in der Absorberschale (2) vor dem Einlegen in den Formenboden (15) Durchlaßöffnungen (19) für die Spritzmasse vorgesehen werden, deren Lage vorzugsweise mit der Lage der Spritzdüsen (23) im Formenboden (15) übereinstimmt.

14. Verfahren nach Anspruch 11, insbesondere zur Herstellung einer Wandverkleidung nach Anspruch 10,
dadurch gekennzeichnet, daß
vor dem Schließen der Form (14, 15) zwischen die Dekorschale (1) und die Absorberschale (2), welche auf ihrer Innenseite mit Rippen (8) versehen wurde, die der Spaltdicke etwa entsprechen, ein unter vorzugsweise schwachem Luftdruck stehender, an den Enden verschlossener Folienschlauchabschnitt (24, 25) so eingelegt wird, daß sich die Folienschlauchoberfläche - vorzugsweise durch Wirkung des Innendruckes im Folienschlauchabschnitt (24, 25) und bevorzugt von Wärme - an die Innenseiten (12, 13) der Dekorschale (1) und der Absorberschale (2) anlegt und beim Schließen der Form (14, 15) mit den Innenseiten (12, 13) verbindet.

15. Verfahren nach Anspruch 14,
dadurch gekennzeichnet, daß
die Rippen (8) der Absorberschale (1) eine Höhe erhalten, die der um die zweifache, vorzugsweise der um die einfache bis anderthalbfache Foliendicke verringerten Spaltdike entspricht.

16. Verfahren nach einem der Ansprüche 11 bis 15,
dadurch gekennzeichnet, daß
ein an dem Umfang der Dekorschale (1) vorgesehener Umbug (10) vor Einlegen der Dekorschale (1) in die Form (14, 15) umgelegt, dabei vorzugsweise fixiert und bei der Herstellung der Zwischenschicht (3) durch diese (3) festgelegt wird.

## Claims

1. A wall cover for vehicles, particularly for internally covering the doors of passenger cars, which is substantially adapted to the shape of the surface to be lined for connection therewith, and consists of at least two cover shells (1;2) consisting of at least two layers (4,5;7,26) each, being particularly separately preformed, comprising contours substantially adapted to each other, and forming a decorative shell (1) and an absorber shell (2), whose interfaces facing each other are connected to each other via an intermediate carrier layer (3), and
comprises, as outer layers, a decorative layer (5) facing the vehicle interior and a heavyweight layer (26) adjacent thereto facing the vehicle wall,
**characterized in that**
the carrier layer (3) connecting the cover layers is a first heavyweight layer,
and that the absorber shell (2) consisting of at least one absorber layer (7) and another heavyweight layer (26) comprises a continuous, circumferentially arranged sealing strip or lip (27) at a small distance or no distance at all from the edge of the heavyweight layer (26) on the surface of the heavyweight layer (26) facing the vehicle wall.

2. The wall cover according to claim 1, characterized in that the decorative shell (1) comprises a sublayer (4) between the decorative layer (5) and the carrier layer (3) on at least a portion of its area.

3. The wall cover according to claim 1 or 2, characterized in that the decorative layer (5) and/or the carrier layer (3) are made of a thermally deformable material.

4. The wall cover according to claim 1 or 2, characterized in that the decorative layer (5) of the decorative shell (1) consists of a preferably thermally deformable carrier and a coating deposited thereon or a preferably also thermally deformable cover.

5. The wall cover according to claim 3, characterized in that the decorative layer (5) of the decorative shell (1) consists of a needle-punched nonwoven, a cut-pile carpet material, or a woven textile fabric.

6. The wall cover according to one of claims 2 to 5, characterized in that the decorative shell (1) is composed of two or more separately prefabricated area sections adjacent to each other without a clearance therebetween,
that each individual area section respectively comprises its own decorative layer (5) different from that of the others and/or consisting of a material differentiated from that of the others, and
that the individual area sections of the decorative shell (1) are fixed in their arrangement with respect to each other by connecting the decorative shell (1) to the absorber shell (2).

7. The wall cover according to one of claims 2 to 5, characterized in that the decorative shell (1) is composed of two or more separately prefabricated area sections adjacent to each other without a clearance therebetween, and
that the individual area sections respectively comprise their own decorative layer (5) different from that of the others and/or consisting of a material differentiated from that of the others and are connected - before the moulding process, if necessary - to each other along their contact edges, preferably by welding or bonding.

8. The wall cover according to one of claims 1 to 7, characterized in that the absorber shell (2) consists of an open-cell or air-permeable, acoustically active absorber layer (7) being preferably thermally deformable while maintaining the air-permeability or open-cellularity, and
a heavyweight layer (26) connected to the absorber layer (7) over its entire area and provided with the circumferential sealing strip or lip (27) on the outwardly facing surface.

9. The wall cover according to claim 5, characterized in that the interface (6) of the absorber shell (2) opposite the carrier layer (3) is strengthened at least in partial areas to facilitate the connection to the carrier layer (3).

10. The wall cover according to one of claims 2 to 5, characterized in that the two mould shells (1,2) are connected by a gas-filled tubular sheet section (24,25) inserted into a mould between the mould shells (1,2) and strengthened in the mould and simultaneously forming the carrier layer (4).

11. A method for manufacturing a wall cover according to one of claims 1 to 10, particularly 1 to 9,
**characterized in that**
a prefabricated decorative shell (1) is inserted into a mould cover (14) of a mould of a injection moulding installation consisting of the movably mounted mould half (14) and a fixedly mounted mould half (15)
and a prefabricated absorber shell (2) is inserted into the mould bottom (15), in such a manner
that a preferably substantially continuous gap (20) remains between the decorative shell (1) and the absorber shell (2) after closure of the mould (14,15),
that the cover (14) and the bottom (15) of the mould are heated up preferably separately,
that the mould (14,15) is closed and the contact surfaces (12,13) limiting the gap (20) are connected by producing an intermediate layer (3) filling the gap (20), and
that the wall cover (1-3) is taken out of the mould after cooling of the intermediate layer.

12. The method according to claim 11, characterized in that the gap (20) between the decorative shell (1) and the absorber shell (2) is filled by injecting an acoustically active thermoplastic plastic material connecting to the contact surfaces (12,13) of the decorative shell (1) and the absorber shell (2) under heat after closing the mould (14,15).

13. The method according to claim 12, characterized in that passage openings (19) for the injection moulding composition are provided in the absorber shell (2) before insertion into the mould bottom (15), whose position preferably coincides with the position of the injection nozzles (23) in the mould bottom (15).

14. The method according to claim 11, particularly for manufacturing a wall cover according to claim 10, characterized in that a tubular sheet section (24,25) being closed at its ends and being under faint atmospheric pressure is inserted between the decorative shell (1) and the absorber shell (2), which was provided with ribs (8) on its inside which about correspond to the gap thickness, in such a manner that the tubular sheet surface - preferably through the effect of the inner pressure in the tubular sheet section (24,25) and preferably through heat - engages the insides (12,13) of the decorative shell (1) and the absorber shell (2) and connects to the insides (12,13) upon closing the mould (14,15).

15. The method according to claim 14, characterized in that the ribs (8) of the absorber shell (1) get a height corresponding to the gap thickness decreased by the double sheet thickness, preferably by the single sheet thickness to one and a half times the sheet thickness.

16. The method according to one of claims 11 to 15, characterized in that a backwardly bent portion (10) provided at the circumference of the decorative shell (1) is bent, preferably fixed at the same time and fixed by the intermediate layer (3) upon the production thereof (3) before the decorative shell (1) is inserted into the mould (14,15).

## Revendications

1. Revêtement de paroi pour véhicules, en particulier pour l'habillage intérieur des portes dans les véhicules de tourisme, adapté à la forme de la surface à revêtir et constitué d'au moins deux coques de revêtement (1; 2) constituées, chacune, d'au moins deux couches (4, 5; 7; 26), en particulier préformées séparément, présentant des formes de contour sensiblement adaptées l'une à l'autre, formant une coque de décor (1) et une coque absorbante (2) et dont les surfaces limites, orientées l'une vers l'autre, sont réunies l'une à l'autre par l'intermédiaire d'une couche support médiane (3), et
présentant comme couches extérieures, en direction de l'intérieur du véhicule, une couche de décor (5) et en direction de la paroi du véhicule, une couche lourde (26) appliquée contre celle-ci,
caractérisé par le fait que
la couche support (3) qui relie les coques de revêtement est une première couche lourde,
et que la coque absorbante (2), constituée d'au moins une couche absorbante (7) et d'une autre couche lourde (26), présente, sur la surface de la couche lourde (26) orientée vers la paroi du véhicule, à faible distance du bord de la couche lourde (26), ou à distance nulle de ce bord, un profilé d'étanchéité, ou lèvre d'étanchéité, (27) périphérique, continu.

2. Revêtement de paroi selon la revendication 1,
caractérisé
par le fait que la coque de décor (1) présente, au moins sur une partie de sa surface, une sous-couche (4) entre la couche de décor (5) et la couche support (3).

3. Revêtement de paroi selon la revendication 1 ou 2,
caractérisé
par le fait que la couche de décor (5) et /ou la couche support (3) sont constituées d'un matériau pouvant être mis en forme thermiquement.

4. Revêtement de paroi selon la revendication 1 ou 2
caractérisé
par le fait que la couche de décor (5) de la coque de décor (1) est constituée d'un support, pouvant de préférence se former thermiquement, et d'une enduction rapportée sur celui-ci ou d'un recouvrement, pouvant de préférence également se former thermiquement.

5. Revêtement de paroi selon la revendication 3,
caractérisé
par le fait que la couche de décor (5) de la coque de décor (1) est constituée d'une moquette aiguilletée, d'une tapisserie de velours ou d'un tissu tissé.

6. Revêtement de paroi selon l'une des revendications 2 à 5,
caractérisé
par le fait que la coque de décor (1) est composée de deux, ou plus, portions de surface préfabriquées individuellement, se raboutant l'une à l'autre sans espace intermédiaire,
que chacune des différentes portions de surface présente sa propre couche de décor (5) différente de celles des autres portions et/ou est constituée d'un matériau différent de celui des autres portions et
que l'on fixe dans leur disposition l'une par rapport à l'autre les différentes portions de surface de la coque de décor (1) par la liaison de la coque de décor (1) avec la coque absorbante (2).

7. Revêtement de paroi selon l'une des revendications 2 à 5,
caractérisé
par le fait que la coque de décor (1) est composée de deux, ou plus, portions de surface préfabriquées individuellement, se raboutant l'une à l'autre sans espace intermédiaire et
que les différentes portions de surface présentent, chacune, leurs propres couches de décor (5) différentes de celles des autres portions et/ou sont constituées d'un matériau différent et sont reliées l'une à l'autre - éventuellement avant le processus de mise en forme - le long de leurs bords de contact, de préférence par soudage ou collage.

8. Revêtement de paroi selon l'une des revendications 1 à 7,
caractérisé
par le fait que la coque absorbante (2) est constituée d'une couche absorbante (7) constituée d'un matériau à pores ouverts ou perméable à l'air, à effet acoustique, pouvant de préférence être mis en forme thermiquement en conservant sa perméabilité à l'air et ses pores ouverts et d'une couche lourde (26) reliée sur toute sa surface avec la couche absorbante (7) et munie, sur la surface orientée vers l'extérieur, d'un profilé d'étanchéité, ou lèvre d'étanchéité, (27) périphérique.

9. Revêtement de paroi selon la revendication 5,
caractérisé
par le fait que la couche limite (6) de la coque absorbante (2) située en face de la couche support (3) est rigidifée, au moins dans des zones partielles, pour faciliter la liaison avec la couche support (3).

10. Revêtement de paroi selon l'une des revendications 2 à 5,
caractérisé
par le fait que les deux coques de forme (1, 2) sont reliées par une portion (24, 25) de boyau fait d'une feuille, rapportée dans un moule entre les coques de forme (1, 2), remplie de gaz, fixée dans la forme et formant en même temps la couche support (4).

11. Procédé de fabrication d'un revêtement de paroi selon l'une des revendications 1 à 10, en particulier 1 à 9,
caractérisé
par le fait que dans un moule d'une installation de moulage par injection, constitué d'une moitié (14) de moule montée mobile et d'une moitié (15) de moule montée fixe on pose une coque de décor (1) préfabriquée dans le couvercle (14) du moule
et une coque absorbante (2) préfabriquée dans le fond (15) du moule de façon que,
après la fermeture du moule (14, 15) subsiste entre la coque de décor (1) et la coque absorbante (2) un jeu (20) de préférence sensiblement continu,
que l'on chauffe, de préférence séparément, le couvercle (14) et le fond (15) du moule, que l'on ferme le moule (14, 15) et que, en réalisant une couche intermédiaire (3) qui remplit le jeu (20), on réunit l'une à l'autre les surfaces de contact (12, 13) limitant le jeu (20) et
que l'on sort le revêtement de paroi (1-3) hors du moule après refroidissement de la couche intermédiaire.

12. Procédé selon la revendication 11,
caractérisé
par le fait qu'après la fermeture du moule (14, 15) on remplit le jeu (20) existant entre la coque de décor (1) et la coque absorbante (2) en injectant un plastique thermoplastique à effet acoustique, qui se lie à chaud avec les surfaces de contact (12, 13) de la coque de décor (1) et de la coque absorbante (2).

13. Procédé selon la revendication 12,
caractérisé
par le fait que dans la coque absorbante (2), avant pose dans le fond (15) du moule, on prévoit pour la masse à injecter des ouvertures de passage (19) dont la position coïncide de préférence avec la position des buses d'injection (23) dans le fond du moule (15).

14. Procédé selon la revendication 11, en particulier pour la fabrication d'un revêtement de paroi selon la revendication (10),
caractérisé
par le fait qu'avant la fermeture du moule (14, 15) on pose entre la coque de décor (1) et la coque absorbante (2), qui a été munie sur sa face intérieure de nervures (8) correspondant à peu près à l'épaisseur du jeu, une portion (24, 25) d'un boyau fait d'une feuille, mis sous pression d'air, de préférence faible, fermé aux extrémités, de façon telle que de la surface du boyau fait d'une feuille s'applique - de préférence sous l'action de la pression intérieure régnant dans la portion (24, 25) du boyau fait d'une feuille et de préférence sous l'action de la chaleur - contre les faces intérieures (12, 13) de la coque de décor (1) et de la coque absorbante (2) et, le moule (14, 15) étant fermé, se lie avec les faces intérieures (12, 13).

15. Procédé selon la revendication 14,
caractérisé
par le fait que l'on donne aux nervures (8), de la coque absorbante (1) une hauteur qui correspond à l'épaisseur du jeu diminuée de deux fois l'épaisseur de la feuille et de préférence à l'épaisseur du jeu diminuée d'une fois à une fois et demie l'épaisseur de la feuille.

16. Procédé selon l'une des revendications 11 à 15,
caractérisé
par le fait qu'avant pose de la coque de décor (1) dans le moule (14, 15), on dispose un rabat (10) prévu à la périphérie de la coque de décor (1), que de préférence on l'y fixe et que, lors de la fabrication de la couche intermédiaire (3), il y est fixé par celle-ci (3).
